# FASCICULE DE BREVET EUROPEEN

(11) **EP 3 376 639 B1**
(45) Date de publication et mention de la délivrance du brevet: **01.01.2020**
(21) Numéro de dépôt: 18158678.5
(22) Date de dépôt: 26.02.2018
(51) Int. Cl.: H02K 1/27

(54) **ROTOR DE MACHINE ELECTRIQUE TOURNANTE MUNI DE PIECES DE MAINTIEN D'AIMANTS PERMANENTS**
ROTOR EINER ELEKTRISCH UMLAUFENDEN MASCHINE, DER MIT HALTERUNGSTEILEN FÜR DAUERMAGNETEN AUSGESTATTET IST
ROTOR OF ROTARY ELECTRICAL MACHINE PROVIDED WITH PARTS FOR HOLDING PERMANENT MAGNETS

(30) Priorité: 15.03.2017 FR 1752089
(43) Date de publication de la demande: 19.09.2018
(73) Titulaire: VALEO EQUIPEMENTS ELECTRIQUES MOTEUR, 94046 Créteil Cedex (FR)
(72) Inventeur: EL BARAKA, Khadija, 94046 CRETEIL (FR); JUGOVIC, Svetislav, 94046 CRETEIL (FR)
(74) Mandataire: Cardon, Nicolas

(56) Documents cités:
- WO-A1-2013/175117
- WO-A2-2013/057673
- DE-A1-102012 016 927
- DE-A1-102013 206 438
- FR-A1- 3 028 360

## Description

L'invention concerne un rotor de machine électrique tournante muni de pièces de maintien d'aimants permanents.

Le document WO 2013/057673 A2 décrit un rotor comportant des pièces de maintien d'aimants permanents.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre sur des paliers par l'intermédiaire de roulements. Le rotor comporte un corps formé par un empilage de feuilles de tôles maintenues sous forme de paquet au moyen d'un système de fixation adapté.

Le stator comporte un corps constitué par un empilage de tôles minces formant une couronne, dont la face intérieure est pourvue d'encoches ouvertes vers l'intérieur pour recevoir des enroulements de phase. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un onduleur fonctionnant également en pont redresseur.

Par ailleurs, le rotor peut comporter un corps formé par un paquet de tôles réalisé dans un matériau magnétique, notamment en acier, ainsi que des pôles formés par une pluralité d'aimants permanents logés dans des cavités du corps. Lorsque les tolérances de réalisation du rotor sont grandes afin de réduire les coûts de fabrication, il est possible que les aimants soient mal plaqués à l'intérieur des cavités du rotor.

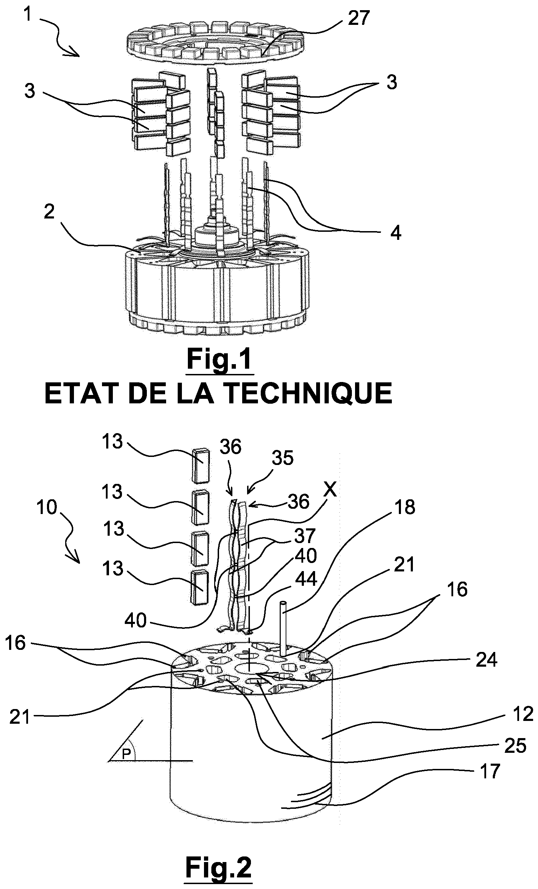

Comme cela est illustré sur la figure 1, afin de maintenir les aimants à l'intérieur du rotor 1, il est connu d'insérer dans chaque cavité 2, prévue pour accueillir les aimants 3, une bande flexible 4 exerçant une force de maintien sur les aimants 3 correspondants. Toutefois, un tel dispositif n'est pas optimal lors de l'opération d'assemblage lorsque les cavités 2 du rotor présentent un profil complexe.

L'invention vise à remédier efficacement à cet inconvénient en proposant une machine électrique tournante comportant un rotor muni d'un corps ayant un axe, le corps de rotor comportant une pluralité de cavités longitudinales agencées pour recevoir chacune au moins un aimant permanent,
- des pôles magnétiques formés chacun par les aimants permanents logés dans deux cavités adjacentes formant un V dans un plan orthogonal à l'axe du corps de rotor,
- le rotor comportant au moins une pièce de maintien des aimants permanents dans les cavités,
caractérisée en ce que la pièce de maintien comporte deux bandes allongées, chaque bande comportant au moins un bossage destiné à appliquer un effort de maintien de l'aimant permanent correspondant dans la cavité, et en ce que la pièce de maintien comporte en outre au moins deux bras de liaison entre les deux bandes, le bossage s'étendant axialement entre les deux bras de liaison.

L'invention permet ainsi de faciliter le positionnement des pièces de maintien à l'intérieur des cavités ayant une configuration en V par rapport à des pièces de maintien à bande unique. L'invention permet en outre de limiter la perte de matière lors de la découpe de tôle pour réaliser les pièces de maintien.

Selon une réalisation, l'effort de maintien est appliqué par le bossage sur l'aimant permanent correspondant en direction d'une périphérie externe du corps de rotor.

Selon une réalisation, au moins une bande de la pièce de maintien comporte une patte de butée contre une face d'extrémité du corps de rotor.

Selon une réalisation, chaque bande de la pièce de maintien comporte un ressort pour l'application d'un effort de maintien axial de l'aimant permanent dans la cavité correspondante.

Selon une réalisation, la pièce de maintien comporte une pluralité de bossages ménagés dans chaque bande.

Selon une réalisation, la pièce de maintien comporte un même nombre de bossages sur chaque bande.

Selon une réalisation, la pièce de maintien comporte une alternance axiale de bossages et de bras de liaison.

Selon une réalisation, les bras de liaison s'étendent transversalement par rapport à une direction d'allongement longitudinale de ladite pièce de maintien.

Selon une réalisation, les bras de liaison sont situés à l'intérieur d'une zone de jonction entre les deux cavités.

Selon une réalisation, les deux bandes de la pièce de maintien sont libres à leurs extrémités.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une vue en perspective éclatée d'un rotor de machine électrique tournante comportant des aimants introduits dans des cavités longitudinales dudit rotor et maintenus par des lamelles flexibles selon l'état de la technique;
La figure 2 est une vue en perspective éclatée d'un rotor de machine électrique tournante selon la présente invention ;
La figure 3 est une vue en perspective d'une pièce de maintien d'aimants permanents selon la présente invention;
La figure 4 est une vue en coupe d'un rotor de machine électrique tournante selon la présente invention illustrant le montage d'une pièce de maintien à l'intérieur de deux cavités adjacentes agencées en V;
La figure 5 est une vue en coupe d'une bande de la pièce de maintien selon l'invention insérée dans une cavité du rotor;
La figure 6 est une vue de dessus de la plaque de matière découpée à partir de laquelle est réalisée la pièce de maintien selon la présente invention.

Les éléments identiques, similaires, ou analogues conservent la même référence d'une figure à l'autre.

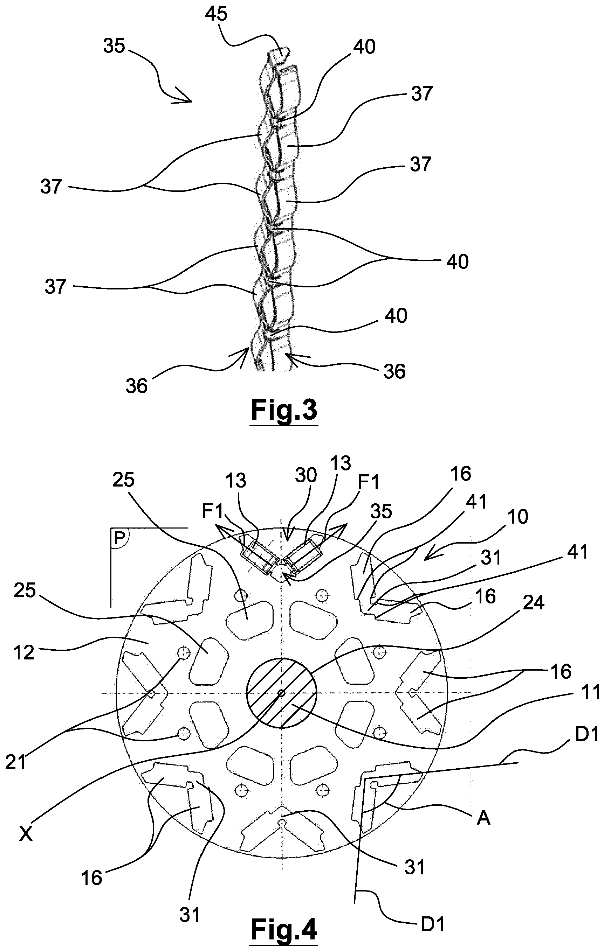

Les figures 2 et 4 montrent un rotor 10 monté sur un arbre 11 comportant un corps 12 formé par un paquet de tôles réalisé dans un matériau magnétique, notamment en acier, ainsi qu'une pluralité d'aimants permanents 13 destinés à être logés dans des cavités 16 du corps 12. Les tôles 17 du paquet empilées axialement pourront être maintenues au moyen de rivets 18 traversant axialement le rotor 10 de part en part via des trous de fixation 21. Le corps de rotor 12 d'axe X comporte une ouverture centrale 24 pour le passage de l'arbre 11 s'étendant suivant l'axe X. L'arbre 11 pourra être emmanché en force à l'intérieur de l'ouverture 24 pour lier en rotation le corps de rotor 12 et l'arbre 11.

Le corps de rotor 12 comporte également des évidements 25 pour alléger le rotor 10. Certains évidements 25, par exemple un sur deux, pourront être utilisés pour la fixation de flasques 27 sur les extrémités du corps 12 de rotor 10, tel que celui montré sur la figure 1.

Plus précisément, dans un plan de coupe P orthogonal à l'axe X, les cavités 16 s'étendent longitudinalement suivant une direction D1. Les cavités 16 pourront être axialement traversantes ou de configuration borgne. Les pôles magnétiques 30 du rotor 10 sont formés chacun par les aimants 13 logés dans deux cavités 16 adjacentes formant un V dans le plan orthogonal P. Autrement dit, les directions d'allongement longitudinales D1 de deux cavités 16 adjacentes forment un angle A non nul l'un par rapport à l'autre, tel que montré sur la figure 4. Les deux cavités 16 adjacentes sont reliées entre elles par une zone de jonction 31 s'étendant axialement au niveau de la pointe du profil en V.

Comme on peut le voir sur la figure 2, chaque cavité 16 reçoit une pluralité d'aimants 13 empilés axialement les uns sur les autres. En l'occurrence, chaque cavité 16 reçoit quatre aimants 13 de forme parallélépipédique. En variante, le nombre d'aimants 13 pourra bien entendu être différent. Un aimant 13 unique pourra également être inséré à l'intérieur de chaque cavité 16. Les aimants permanents 13 pourront être réalisés en terre rare ou en ferrite selon les applications et la puissance recherchée de la machine.

Les aimants 13 sont maintenus en position à l'intérieur des cavités 16 au moyen de pièces de maintien 35. Une même pièce de maintien 35 permet de maintenir les aimants 13 situés dans deux cavités 16 adjacentes.

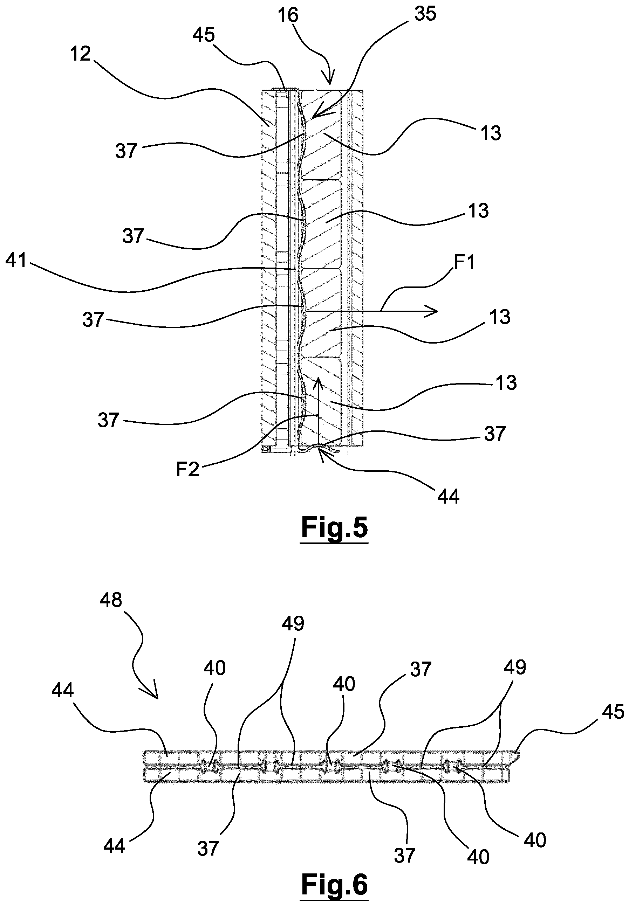

A cet effet, comme cela est illustré sur les figures 2 et 3, la pièce de maintien 35 comporte deux bandes 36 allongées insérées chacune à l'intérieur d'une cavité 16 correspondante. Chaque bande 36 est munie d'une pluralité de bossages 37 destinés à appliquer un effort de maintien F1 de l'aimant 13 dans la cavité 16, tel que montré sur les figures 4 et 5.

La pièce de maintien 35 comporte également des bras de liaison 40 entre les deux bandes 36. Les bras de liaison 40 s'étendent transversalement par rapport à la direction d'allongement axiale des bandes 36. Chaque bossage 37 s'étend axialement par rapport à l'axe X entre deux bras de liaison 40. Il existe ainsi une alternance axiale entre les bras de liaison 40 et les bossages 37. La pièce de maintien 35 comporte un même nombre de bossages 37 sur chaque bande 36, soit quatre (un pour chaque aimant 13 logé dans la cavité 16 correspondante).

En l'occurrence, comme on peut le voir sur la figure 4, l'effort de maintien F1 est appliqué par chaque bossage 37 sur un aimant 13 correspondant en direction d'une périphérie externe du corps de rotor 12. A cet effet, chaque bande 36 est située du côté de la périphérie interne du rotor 10 et est intercalé entre l'aimant 13 et une face interne d'appui 41 de la cavité 16 tournée vers la périphérie externe du corps de rotor 12. Chaque bossage 37 est comprimé et applique par réaction sur un aimant 13 correspondant un effort F1 suivant une direction parallèle à la direction longitudinale D1 de la cavité 16.

Par ailleurs, chaque bande 36 comporte un ressort 44 pour l'application d'un effort de maintien axial F2 sur l'empilement d'aimants 13 à l'intérieur de la cavité 16 correspondante, tel que cela est illustré par la figure 5. Chaque ressort 44 est constitué par un rebord s'étendant sensiblement perpendiculairement par rapport à la direction d'allongement longitudinale de la bande 36 correspondante. Chaque ressort 44 est muni d'un bossage 37 destiné à être comprimé entre un aimant 13 d'extrémité de l'empilement et un flasque d'extrémité 27 pour l'application par réaction de l'effort de maintien axial F2.

De préférence, au moins une bande 36 de la pièce de maintien 35 comporte une patte de butée 45 contre une face d'extrémité du corps de rotor 12, comme cela est visible sur les figures 3 et 5. Cela permet ainsi de maintenir en position la pièce de maintien 35 des aimants 13 lors du montage du rotor.

Les deux bandes 36 sont libres à leurs extrémités, c'est-à-dire qu'elles ne sont pas reliées entre elles par des bras de liaison 40 au niveau de leur extrémité.

On décrit ci-après le procédé de fabrication des pièces de maintien 35 formées à partir d'une plaque de métal allongée 48 montrée sur la figure 6. Des échancrures longitudinales 49 sont réalisées par découpage dans la partie médiane de la plaque 48 à intervalle régulier afin de délimiter les bandes 36 et les bras de liaison 40. Des bossages 37 sont réalisés dans les zones séparant deux bras de liaison 40 successifs.

Une des extrémités de chaque bande 36 portant un bossage 37 est repliée pour former le ressort 44 tandis que l'autre extrémité est repliée pour former la patte de butée 45. Afin de faciliter le pliage, la pièce de maintien 35 pourra comporter une zone de pliage constituée par un amincissement de matière local ou deux encoches ménagées dans les bords des bandes 36.

Chaque pièce de maintien 35 est insérée à l'intérieur des cavités 16 en V correspondantes, de sorte que chaque bande 36 prend appui contre une face d'appui 41 visible sur la figure 4 pour appliquer l'effort de maintien F1 sur les aimants 13. Les bras de liaison 40 sont insérés à l'intérieur de la zone de jonction 31 entre les deux cavités 16.

Deux flasques 27 réalisés avantageusement en acier amagnétique, tels que celui montré sur la figure 1, sont disposés à chaque extrémité axiale du corps 12 pour assurer une retenue des aimants 13 à l'intérieur des cavités 16 et un équilibrage du rotor 10. Des organes de fixation, tels que des vis, sont insérés dans certains des évidements 25 pour assurer la fixation des flasques.

Par ailleurs, la machine électrique tournante pourra comporter un stator (non représenté) entourant le rotor 10 avec présence d'un entrefer. Ce stator comporte un corps constitué par un empilage de tôles minces formant une couronne, dont la face intérieure est pourvue d'encoches ouvertes vers l'intérieur pour recevoir des enroulements de phase. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un onduleur fonctionnant également en pont redresseur.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante comportant un rotor (10) muni d'un corps (12) ayant un axe (X), le corps de rotor (12) comportant une pluralité de cavités longitudinales (16) agencées pour recevoir chacune au moins un aimant permanent (13),
- des pôles magnétiques (30) formés chacun par les aimants permanents (13) logés dans deux cavités (16) adjacentes formant un V dans un plan orthogonal (P) à l'axe (X) du corps de rotor (12),
- le rotor (10) comportant au moins une pièce de maintien (35) des aimants permanents (13) dans les cavités (16),
- la pièce de maintien (35) comporte deux bandes (36) allongées, chaque bande (36) comportant au moins un bossage (37) destiné à appliquer un effort de maintien (F1) de l'aimant permanent (13) correspondant dans la cavité (16),
**caractérisée en ce que** la pièce de maintien (35) comporte en outre au moins deux bras de liaison (40) entre les deux bandes (36), le bossage (37) s'étendant axialement entre les deux bras de liaison.

2. Machine électrique tournante selon la revendication 1, **caractérisée en ce que** l'effort de maintien (F1) est appliqué par le bossage (37) sur l'aimant permanent (13) correspondant en direction d'une périphérie externe du corps de rotor (12).

3. Machine électrique tournante selon la revendication 1 ou 2, **caractérisée en ce qu'**au moins une bande (36) de la pièce de maintien (35) comporte une patte de butée (45) contre une face d'extrémité du corps de rotor (12).

4. Machine électrique tournante selon l'une quelconque des revendications 1 à 3, **caractérisée en ce que** chaque bande (36) de la pièce de maintien (35) comporte un ressort (44) pour l'application d'un effort de maintien axial (F2) de l'aimant permanent (13) dans la cavité (16) correspondante.

5. Machine électrique tournante selon l'une quelconque des revendications 1 à 4, **caractérisée en ce que** la pièce de maintien (35) comporte une pluralité de bossages (37) ménagés dans chaque bande (36).

6. Machine électrique tournante selon la revendication 5, **caractérisée en ce que** la pièce de maintien (35) comporte un même nombre de bossages (37) sur chaque bande (36).

7. Machine électrique tournante selon la revendication 5 ou 6, **caractérisée en ce que** la pièce de maintien (35) comporte une alternance axiale de bossages (37) et de bras de liaison (40).

8. Machine électrique tournante selon l'une quelconque des revendications 1 à 7, **caractérisée en ce que** les bras de liaison (40) s'étendent transversalement par rapport à une direction d'allongement longitudinale de ladite pièce de maintien (35).

9. Machine électrique tournante selon l'une quelconque des revendications 1 à 8, **caractérisée en ce que** les bras de liaison (40) sont situés à l'intérieur d'une zone de jonction (31) entre les deux cavités (16).

10. Machine électrique tournante selon l'une quelconque des revendications 1 à 9, **caractérisée en ce que** les deux bandes (36) de la pièce de maintien (35) sont libres à leurs extrémités.

## Patentansprüche

1. Drehende elektrische Maschine mit einem Rotor (10), der mit einem Gehäuse (12) mit einer Achse (X) versehen ist, wobei das Rotorgehäuse (12) eine Vielzahl von Längskavitäten (16) umfasst, die dazu eingerichtet sind, jeweils mindestens einen Permanentmagneten (13) aufzunehmen,
- magnetische Pole (30), die jeweils durch die Permanentmagneten (13) gebildet werden, die in zwei angrenzenden Kavitäten (16) aufgenommen sind, die ein V in einer senkrecht zur Achse (X) des Rotorgehäuses (12) verlaufenden Ebene (P) bilden,
- wobei der Rotor (10) mindestens ein Halterungsteil (35) zum Halten der Permanentmagneten (13) in den Kavitäten (16) umfasst,
- das Halterungsteil (35) umfasst zwei langgestreckte Bänder (36), wobei jedes Band (36) mindestens eine Erhebung (37) umfasst, die dazu bestimmt ist, eine Haltekraft (F1) zum Halten des entsprechenden Permanentmagneten (13) in der Kavität (16) aufzubringen,
**dadurch gekennzeichnet, dass** das Halterungsteil (35) ferner mindestens zwei Verbindungsarme (40) zwischen den beiden Bändern (36) umfasst, wobei sich die Erhebung (37) axial zwischen den beiden Verbindungsarmen erstreckt.

2. Drehende elektrische Maschine nach Anspruch 1, **dadurch gekennzeichnet, dass** die Haltekraft (F1) von der Erhebung (37) auf den entsprechenden Permanentmagneten (13) in Richtung eines äußeren Umfangs des Rotorgehäuses (12) aufgebracht wird.

3. Drehende elektrische Maschine nach Anspruch 1 oder 2, **dadurch gekennzeichnet, dass** mindestens ein Band (36) des Halterungsteils (35) eine Anschlaglasche (45) zum Anschlagen gegen eine Endfläche des Rotorgehäuses (12) umfasst.

4. Drehende elektrische Maschine nach einem der Ansprüche 1 bis 3, **dadurch gekennzeichnet, dass** jedes Band (36) des Halterungsteils (35) eine Feder (44) zum Aufbringen einer axialen Haltekraft (F2) zum Halten des Permanentmagneten (13) in der entsprechenden Kavität (16) umfasst.

5. Drehende elektrische Maschine nach einem der Ansprüche 1 bis 4, **dadurch gekennzeichnet, dass** das Halterungsteil (35) eine Mehrzahl von Erhebungen (37) umfasst, die in jedem Band (36) ausgebildet sind.

6. Drehende elektrische Maschine nach Anspruch 5, **dadurch gekennzeichnet, dass** das Halterungsteil (35) an jedem Band (36) die gleiche Anzahl von Erhebungen (37) umfasst.

7. Drehende elektrische Maschine nach einem der Ansprüche 5 oder 6, **dadurch gekennzeichnet, dass** das Halterungsteil (35) eine axiale Wechselfolge aus Erhebungen (37) und Verbindungsarmen (40) umfasst.

8. Drehende elektrische Maschine nach einem der Ansprüche 1 bis 7, **dadurch gekennzeichnet, dass** sich die Verbindungsarme (40) quer in Bezug auf eine Längsausdehnungsrichtung des Halterungsteils (35) erstrecken.

9. Drehende elektrische Maschine nach einem der Ansprüche 1 bis 8, **dadurch gekennzeichnet, dass** die Verbindungsarme (40) im Innern eines Übergangsbereichs (31) zwischen den beiden Kavitäten (16) gelegen sind.

10. Drehende elektrische Maschine nach einem der Ansprüche 1 bis 9, **dadurch gekennzeichnet, dass** die beiden Bänder (36) des Halterungsteils (35) an ihren Enden unverbunden sind.

## Claims

1. Rotary electrical machine comprising a rotor (10) provided with a body (12) having an axis (X), the rotor body (12) comprising a plurality of longitudinal cavities (16) arranged to each receive at least one permanent magnet (13),
- magnetic poles (30) each formed by the permanent magnets (13) housed in two adjacent cavities (16) forming a V in a plane (P) orthogonal to the axis (X) of the rotor body (12),
- the rotor (10) comprising at least one part (35) for holding the permanent magnets (13) in the cavities (16),
- the holding part (35) comprises two elongate strips (36), each strip (36) comprising at least one boss (37) designed to apply a force (F1) for holding the corresponding permanent magnet (13) in the cavity (16),
**characterized in that** the holding part (35) further comprises at least two connecting arms (40) between the two strips (36), the boss (37) extending axially between the two connecting arms.

2. Rotary electrical machine according to Claim 1, **characterized in that** the holding force (F1) is applied by the boss (37) on the corresponding permanent magnet (13) in the direction of an external periphery of the rotor body (12).

3. Rotary electrical machine according to Claim 1 or 2, **characterized in that** at least one strip (36) of the holding part (35) comprises a tab (45) for abutment against an end face of the rotor body (12).

4. Rotary electrical machine according to any one of Claims 1 to 3, **characterized in that** each strip (36) of the holding part (35) comprises a spring (44) for applying an axial force (F2) for holding the permanent magnet (13) in the corresponding cavity (16) .

5. Rotary electrical machine according to any one of Claims 1 to 4, **characterized in that** the holding part (35) comprises a plurality of bosses (37) created in each strip (36) .

6. Rotary electrical machine according to Claim 5, **characterized in that** each strip (36) of the holding part (35) has the same number of bosses (37).

7. Rotary electrical machine according to Claim 5 or 6, **characterized in that** the holding part (35) comprises an axial alternation of bosses (37) and connecting arms (40).

8. Rotary electrical machine according to any one of Claims 1 to 7, **characterized in that** the connecting arms (40) extend transversely with respect to a direction of longitudinal extent of said holding part (35) .

9. Rotary electrical machine according to any one of Claims 1 to 8, **characterized in that** the connecting arms (40) are located inside a junction region (31) between the two cavities (16).

10. Rotary electrical machine according to any one of Claims 1 to 9, **characterized in that** the two strips (36) of the holding part (35) are free at their ends.
